# EUROPEAN PATENT SPECIFICATION

(11) **EP 4 495 004 B1**
(45) Date of publication and mention of the grant of the patent: **29.07.2026**
(21) Application number: 24176896.9
(22) Date of filing: 20.05.2024
(51) Int. Cl.: B64D 9/00, B60P 7/13

(54) **COMPACT VERTICALLY ACTUATED ANTI-ROLLOUT RESTRAINT FOR USE IN INTERNAL CARGO RESTRAINT SYSTEM**
KOMPAKTE VERTIKAL BETÄTIGTE ANTIROLLRÜCKHALTEVORRICHTUNG ZUR VERWENDUNG IN EINEM INTERNEN FRACHTRÜCKHALTESYSTEM
DISPOSITIF COMPACT DE RETENUE ANTI-DÉVÉRS VERTICALEMENT ACTIONNÉ POUR UTILISATION DANS UN SYSTÈME DE RETENUE DE CARGAISON INTERNE

(30) Priority: 21.07.2023 US 202363515069 P; 13.03.2024 US 202418604303
(43) Date of publication of application: 22.01.2025
(73) Proprietor: Goodrich Corporation, Charlotte, NC 28217-4578 (US)
(72) Inventor: HAYDEN, Dawson, Grandin (US); MEYER, Zachary, Bismarck (US); LIMKE, Jacob LeRoy, Jamestown (US); STEGMILLER, Wesley K., Jamestown (US)
(74) Representative: Dehns

(56) References cited:
- EP-A1- 3 845 417
- EP-A1- 4 011 701
- US-A- 4 379 668

## Description

### FIELD

The present disclosure generally relates to the field of cargo handling in vehicles, such as aircraft, and, more particularly, to a compact vertically actuated anti-rollout restraint for use in internal cargo restraint system.

### BACKGROUND

Typical aircraft internal cargo system Anti Roll Out (ARO) restraints generally use over-rideable mechanisms, which means they may be pushed down or overridden by cargo pallets traveling in one direction and the restraint then pops back up via torsion spring(s) to prevent the pallet from traveling back in the opposite direction. These restraints typically use manual actuation via hand operation to deploy and/or require adequate space for the restraint head to rotate between the deployed and stowed states.

US 4379668 A discloses a locking device for securing cargo in containers or pallets, comprising two latches hinged together and hinged to the locking device frame, one by a fixed hinge pin and the other by a hinge pin which can move in translation. The latches are constantly acted on by a spring which draws them into the cargo locking position, in which the latches project up above the frame, by a spring and are changed over, by downwards pressure on the latches, to the cargo unlocking position, in which they are retracted.

EP 3845417 A1 discloses a cargo restraint system comprising a cargo conveyor system including a plurality of rollers, inner and outer pawls and a lever, all rotatably attached to the cargo conveyor system, and a mechanical linkage connecting the lever to the outer pawl and to the inner pawl, the outer pawl and the inner pawl being controlled by movement of the lever through the mechanical linkage.

EP 4011701 A1 discloses an anti-rollout assembly may comprise: a housing defining a cavity; a guide/restraint head pivotably coupled to the housing at a first end of the cavity; an overridable trigger pivotably coupled to the housing at a second end of the cavity, the second end opposite the first end; and a locking system operably coupled to the guide/restraint head and the overridable trigger, the locking system configured to bias the guide/restraint head into an upright position, the locking system configured to retract the guide/restraint head into the cavity in response to a first lateral force driving the overridable trigger. The locking system may comprise a drive link and a locking link and be configured to lock the guide/restraint head in a raised state.

### SUMMARY

According to an aspect, an anti-roll out restraint assembly for a cargo handling system is disclosed. The anti-roll out restraint assembly includes a housing, a restraint head coupled to the housing, a cam path drive pin coupled to the restraint head, a cam path lever coupled to the housing, and a set of compression springs. The restraint head is configured to vertically translate between a deployed position and a stowed position and between the stowed position and the deployed position. The cam path lever is configured to restrain the restraint head via the cam path drive pin responsive to the restraint head being in the stowed position. The set of compression springs is configured to apply at least one of a constant or nearly constant upward force on the restraint head.

In various embodiments, the anti-roll out restraint assembly further includes a set of C-springs coupled to the housing. In various embodiments, the set of C-springs are configured to provide opposing rotational spring forces to maintain the cam path lever in a neutral state unless acted upon by the cam path drive pin.

In various embodiments, responsive to the anti-roll out restraint assembly in the deployed position, the cam path lever further includes a protruding tip configured to engage with the cam path drive pin responsive to a first downward force being applied to the restraint head such that the restraint head translates in a downward direction.

In various embodiments, responsive to the cam path drive pin engaging with a first face of the protruding tip, the cam path lever rotates in a first direction until the cam path drive pin disengages with the first face of the protruding tip.

In various embodiments, the cam path lever further includes an over-travel stop configured to engage with the cam path drive pin responsive to the cam path drive pin disengaging with the first face of the protruding tip.

In various embodiments, responsive to the cam path drive pin disengaging with the over-travel stop and responsive to the first downward force ceasing, the cam path lever rotates in a second direction opposite the first direction until the cam path drive pin engages with a second face of the protruding tip. In various embodiments, the second face is a curved face in which the cam path drive pin is configured to rest within thereby placing the anti-roll out restraint assembly in the stowed position due to the constant or nearly constant upward force on the restraint head provided by the set of compression springs.

In various embodiments, responsive to the anti-roll out restraint assembly in the stowed position, the cam path lever further includes a protruding tip configured to engage with the cam path drive pin. In various embodiments, responsive to a second downward force being applied to the restraint head, the cam path drive pin disengages with a second face of the protruding tip thereby allowing the cam path lever to rotate in a second direction.

In various embodiments, responsive to the cam path lever rotating in the second direction and the second downward force disengaging, the restraint head is configured to translate in upward direction due to the constant or nearly constant upward force on the restraint head provided by the set of compression springs to the deployed position.

In various embodiments, the restraint head further includes a slot. In various embodiments, the housing further includes a pin. In various embodiments, the restraint head is limited in movement in a vertical direction by the pin protruding through the housing into the slot.

In various embodiments, the restraint head includes a central void in which the cam path drive pin is coupled to a side wall of the central void. In various embodiments, the cam path lever is centrally located within the housing.

In various embodiments, the cam path drive pin is coupled to an exterior portion of the restraint head. In various embodiments, the cam path lever is located adjacent to the exterior portion of the restraint head within the housing.

According to a further aspect, a cargo handling system is disclosed. The cargo handling system includes a roller tray, a plurality of rollers, and an anti-roll out restraint assembly positioned between at least two rollers of the plurality of rollers. The plurality of rollers are coupled between sidewalls of the roller tray and spaced apart from one another along a length of the roller tray. The anti-roll out restraint assembly includes a housing, a restraint head coupled to the housing, a cam path drive pin coupled to the restraint head, a cam path lever coupled to the housing, and a set of compression springs. The restraint head is configured to vertically translate between a deployed position and a stowed position and between the stowed position and the deployed position. The cam path lever is configured to restrain the restraint head via the cam path drive pin responsive to the restraint head being in the stowed position. The set of compression springs is configured to apply at least one of a constant or nearly constant upward force on the restraint head.

In various embodiments, the cargo handling system further includes a set of C-springs coupled to the housing. In various embodiments, the set of C-springs are configured to provide opposing rotational spring forces to maintain the cam path lever in a neutral state unless acted upon by the cam path drive pin.

In various embodiments, responsive to the anti-roll out restraint assembly in the deployed position, the cam path lever further includes a protruding tip configured to engage with the cam path drive pin responsive to a first downward force being applied to the restraint head such that the restraint head translates in a downward direction. In various embodiments, responsive to the cam path drive pin engaging with a first face of the protruding tip, the cam path lever rotates in a first direction until the cam path drive pin disengages with the first face of the protruding tip.

In various embodiments, the cam path lever further includes an over-travel stop configured to engage with the cam path drive pin responsive to the cam path drive pin disengaging with the first face of the protruding tip. In various embodiments, responsive to the cam path drive pin disengaging with the over-travel stop and responsive to the first downward force ceasing, the cam path lever rotates in a second direction opposite the first direction until the cam path drive pin engages with a second face of the protruding tip. In various embodiments, the second face is a curved face in which the cam path drive pin is configured to rest within thereby placing the anti-roll out restraint assembly in the stowed position due to the constant or nearly constant upward force on the restraint head provided by the set of compression springs.

In various embodiments, responsive to the anti-roll out restraint assembly in the stowed position, the cam path lever further includes a protruding tip configured to engage with the cam path drive pin. In various embodiments, responsive to a second downward force being applied to the restraint head, the cam path drive pin disengages with a second face of the protruding tip thereby allowing the cam path lever to rotate in a second direction. In various embodiments, responsive to the cam path lever rotating in the second direction and the second downward force disengaging, the restraint head is configured to translate in upward direction due to the constant or nearly constant upward force on the restraint head provided by the set of compression springs to the deployed position.

In various embodiments, the restraint head further includes a slot. In various embodiments, the housing further includes a pin. In various embodiments, the restraint head is limited in movement in a vertical direction by the pin protruding through the housing into the slot.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a flat-bottomed skinned pallet is illustrated, in accordance with various embodiments.
FIG. 2 illustrates a non-flat-bottomed skinned pallet is illustrated, in accordance with various embodiments.
FIG. 3 illustrates an aircraft (e.g., a helicopter) with a cargo handling system is illustrated, in accordance with various embodiments.
FIG. 4 illustrates a perspective view of a portion of a reconfigurable cargo handling system, in accordance with various embodiments.
FIG. 5 illustrates a side view of a set of modular containers loaded into a cargo compartment of a cargo handling system, in accordance with various embodiments.
FIG. 6 illustrates an isometric view of a roller tray that may be coupled to or embedded within a cargo deck of a cargo compartment of a cargo handling system, in accordance with various embodiments.
FIG. 7 illustrates an isometric view of push release vertically actuated ARO restraint integrated into a roller tray, in accordance with various embodiments.
FIG. 8 illustrates an isometric view of push release vertically actuated ARO restraint, in accordance with various embodiments.
FIGS. 9A, 9B, 9C, 9D, 9E, 9F, 9G, 9H, and 9I illustrate a cross-sectional view of a push release vertically actuated ARO restraint, along line A-A of FIG. 8, progressing through a stowing stage, in accordance with various embodiments.
FIGS. 10A, 10B, 10C, 10D, 10E, and 10F illustrate a cross-sectional view of a push release vertically actuated ARO restraint, along line A-A of FIG. 8, progressing through a deploying stage, in accordance with various embodiments.
FIG. 11 illustrates an isometric view of push release vertically actuated ARO restraint in a different configuration, in accordance with various embodiments.
FIG. 12A illustrates an isometric view of deployed locking lever vertically actuated ARO restraint into a roller tray, in accordance with various embodiments.
FIG. 12B illustrates an isometric view of locking lever vertically actuated ARO restraint in the deployed position, in accordance with various embodiments.
FIG. 12C illustrates a cross-sectional view of a locking lever vertically actuated ARO restraint in the deployed position, along line B-B of FIG. 12B, in accordance with various embodiments.
FIG. 13A illustrates an isometric view of stowed locking lever vertically actuated ARO restraint into a roller tray, in accordance with various embodiments.
FIG. 13B illustrates an isometric view of locking lever vertically actuated ARO restraint in a stowed position, in accordance with various embodiments.
FIG. 13C illustrates a cross-sectional view of a locking lever vertically actuated ARO restraint in a stowed position, along line C-C of FIG. 13B, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that changes may be made without departing from the scope of the appended claims.

Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

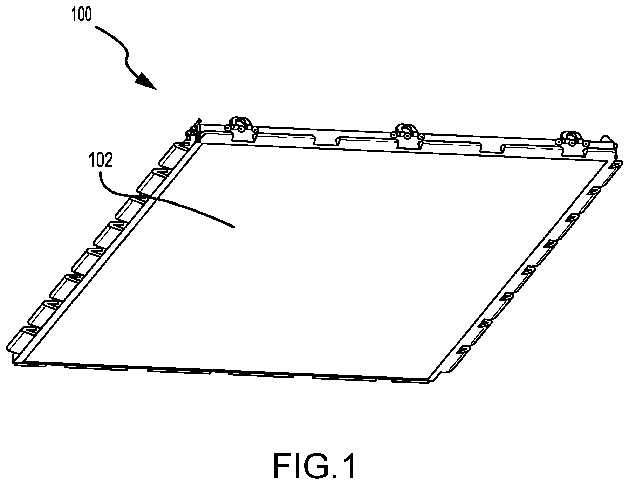

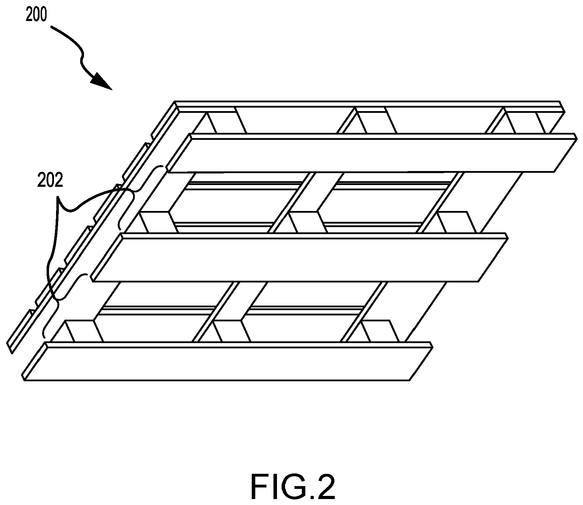

In some instances, cargo restraints may be used to restrain flat bottom or non-flat-bottomed palletized cargo. Typically, over-rideable restraints work well when the palletized cargo has a flat-bottomed skin, such that the over-rideable restraint is pushed down or overridden by the flat-bottomed skin of the palletized cargo traveling in one direction and the over-rideable restraint then pops back up, typically via torsion spring(s), to prevent the flat-bottomed skinned pallet from traveling back in the opposite direction. FIG. 1 illustrates a flat-bottomed skinned pallet is illustrated, in accordance with various embodiments. In various embodiments, a flat-bottomed skinned pallet is substantially flat across the bottom face of the pallet. In various embodiments, flat-bottomed skinned pallet includes a flat-bottomed skin 102. Thus, the over-rideable restraint does not deploy until the entire flat-bottomed skinned pallet 100 is across the over-rideable restraint. However, issues arise with these when the palletized cargo does not have a continuously flat bottom skin. FIG. 2 illustrates a non-flat-bottomed skinned pallet is illustrated, in accordance with various embodiments. In various embodiments, non-flat-bottomed skinned pallet 200 includes a plurality of gaps 202 that may allow for an over-rideable restraint to deploy underneath the palletized cargo and not allow the user to then remove the palletized cargo off the aircraft without putting the user in a potentially dangerous or compromised position. In some instances, manually actuated restraints utilizing a user's hands or fingers to deploy may also sometimes put the user in a dangerous or compromised position to deploy the restraint. Usually, the user will have to reach down to the cargo floor and lift the restraint up using their hands while the pallet or container is in a free state to roll in the cargo bay. In some instances, manually actuated restraints that utilize a push button to release a positive engagement to the restraint are also used frequently. While manually actuated restraints that utilize a push button may be safer if they are manufactured to be foot actuated, i.e. push the trip button with your foot and the restraint deploys, sometimes space constraints do not allow for the use of these types of actuated restraints.

Disclosed herein are systems and methods for utilizing a compact vertically actuated anti-rollout (ARO) restraint for use in internal cargo restraint system. In various embodiments, to address the above issues and/or others, for example, the performance shortfalls of over-rideable restraints jamming up non-flat-bottomed skinned pallets, hand operated restraints being potentially hazardous, and lack of available space within roller trays or other confined areas to allow incorporation of a rotationally actuated restraint, in various embodiments, a compact, vertically actuated ARO restraint is herein disclosed. In various embodiments, the vertically actuated ARO restraint allows actuation between the stowed and deployed states of the restraint to be actuated with a part of a user's body other than the hand (e.g., foot) or a tool so that actuation may occur in a confined space. In various embodiments, the need for an over-rideable device is also mitigated as the user may push the non-flat-bottomed palletized cargo or container past the vertically actuated ARO restraint, then, with hands still on the non-flat-bottomed palletized cargo or container (giving user adequate control) a foot, for example, may be used to push the restraint head so that the vertically actuated ARO restraint deploys to a raised state that restrains the palletized cargo or container.

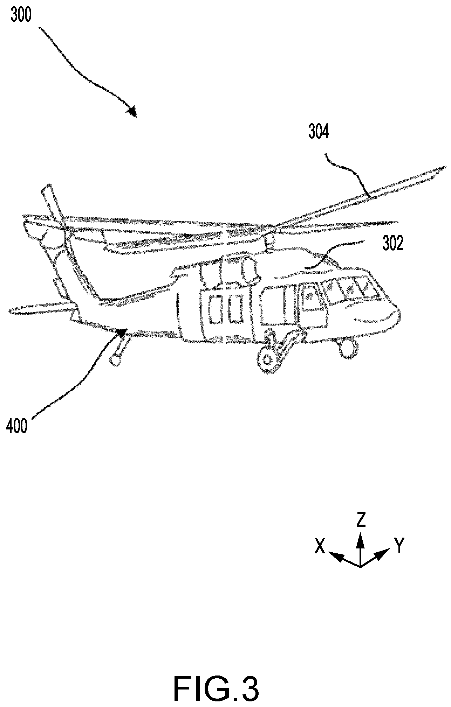

Referring now to FIG. 3, an aircraft (e.g., a helicopter 300) with a cargo handling system 400 is illustrated, in accordance with various embodiments. The helicopter 300 includes an airframe 302 mechanically coupled to a main rotor 304. Main rotor 304 may include a plurality of rotary blades. In various embodiments, the cargo handling system 400 may be disposed at an aft end of the airframe 302.

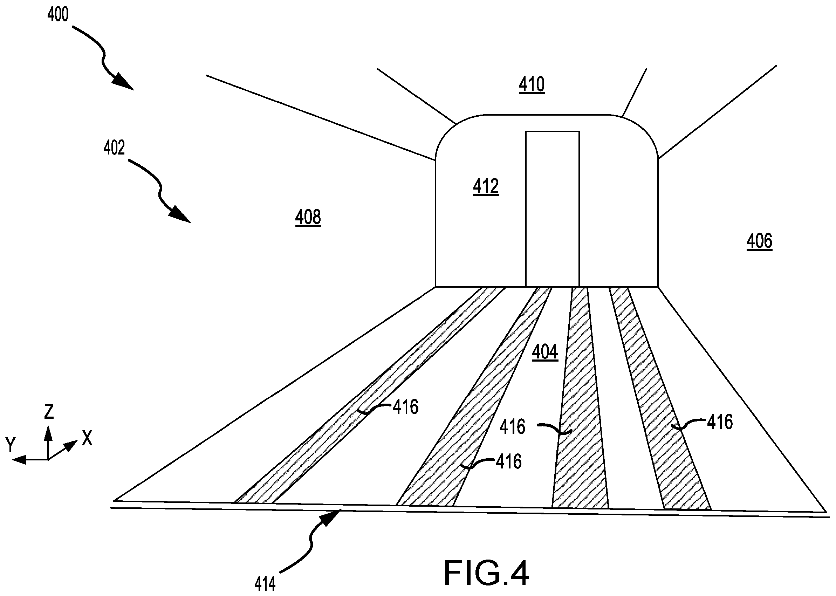

Referring now to FIG. 4, the cargo handling system 400 from FIG. 3 is illustrated in a configuration for transportation of cargo, in accordance with various embodiments. In various embodiments, the cargo handling system 400 includes a cargo compartment 402 into which palletized or containerized cargo may be loaded. In various embodiments, the cargo compartment 402 includes a cargo deck 404, right-side wall 406, left-side wall 408, ceiling 410, forward end 412, and aft or rear end 414. In various embodiments, the cargo compartment 402 is defined by the forward end 412 and the aft or rear end 414 that is spaced from the forward end 412 along a length (or longitudinal) dimension of the cargo compartment 402. In various embodiments, the cargo compartment 402 is defined by the right-side wall 406 and a left-side wall 408 that is spaced from the right-side wall 406 along a width (or lateral) dimension of the cargo compartment 402. In various embodiments, loading of the cargo into the cargo compartment 402 may be aided by roller trays 416 coupled to or embedded within the cargo deck 404. In various embodiments, once the cargo is loaded, the cargo may be restrained by a set of vertically actuated ARO restraints that may integrated into the roller trays 416 that are coupled to or embedded within the cargo deck 404.

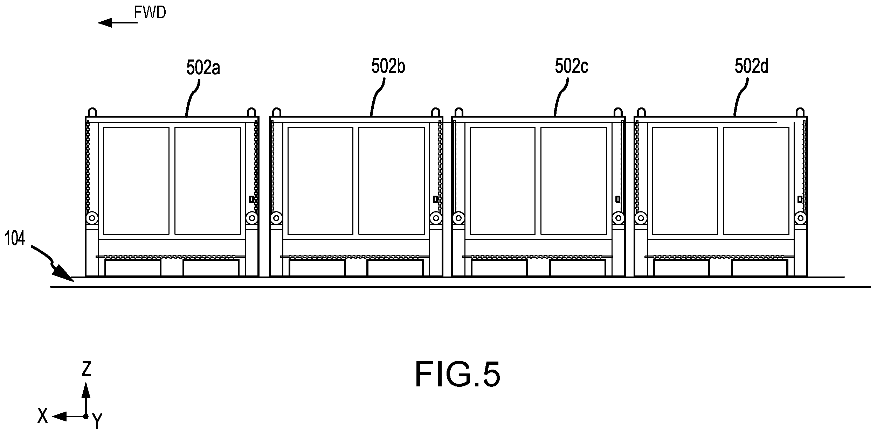

Referring now to FIG. 5, a side view of a set of modular containers loaded into a cargo compartment 402 of a cargo handling system 400 from FIG. 4 is illustrated, in accordance with various embodiments. In various embodiments, the non-flat-bottomed palletized cargo or container 502a-502d are loaded onto the cargo deck 404 and spaced apart in a forward (FWD) direction along the cargo deck 404. In various embodiments, as the non-flat-bottomed palletized cargo or container 502a-502d are loaded, various ones of the vertically actuated ARO restraints, which are integrated into the roller trays 416 that are coupled to or embedded within the cargo deck 404, may be in a stowed state, with a first set of the vertically actuated ARO restraints, i.e. the vertically actuated ARO restraints at the forward end of the aircraft being deployed. As the non-flat-bottomed palletized cargo or container 502a is loaded, it is pushed against the first set of the vertically actuated ARO restraints and a second set of the vertically actuated ARO restraints immediately aft the non-flat-bottomed palletized cargo or container 502a is actuated from the stowed state to a deployed state with a part of a user's body other than the hand (e.g., foot) or a tool. As the non-flat-bottomed palletized cargo or container 502b is loaded, it is pushed against the second set of the vertically actuated ARO restraints and a third set of the vertically actuated ARO restraints immediately aft the non-flat-bottomed palletized cargo or container 502b is actuated from the stowed state to a deployed state with a part of a user's body other than the hand (e.g., foot) or a tool. As the non-flat-bottomed palletized cargo or container 502c is loaded, it is pushed against the third set of the vertically actuated ARO restraints and a fourth set of the vertically actuated ARO restraints immediately aft the non-flat-bottomed palletized cargo or container 502c is actuated from the stowed state to a deployed state with a part of a user's body other than the hand (e.g., foot) or a tool. As the non-flat-bottomed palletized cargo or container 502d is loaded, it is pushed against the fourth set of the vertically actuated ARO restraints and a fifth set of the vertically actuated ARO restraints immediately aft the non-flat-bottomed palletized cargo or container 502d is actuated from the stowed state to a deployed state with a part of a user's body other than the hand (e.g., foot) or a tool.

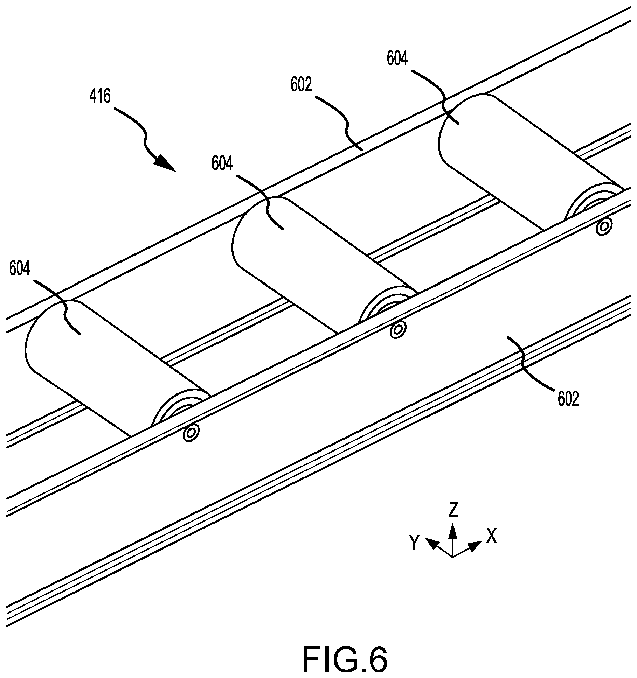

Referring now to FIG. 6, an isometric view of a roller tray that may be coupled to or embedded within a cargo deck 404 of a cargo compartment 402 of a cargo handling system 400 from FIG. 4 is illustrated, in accordance with various embodiments. In various embodiments, the roller tray 416 may include sidewalls 602 that are spaced apart from one another in a y-direction by rollers 604. In various embodiments, each of the rollers 604 may be spaced apart from one another in a x-direction by a predefined distance.

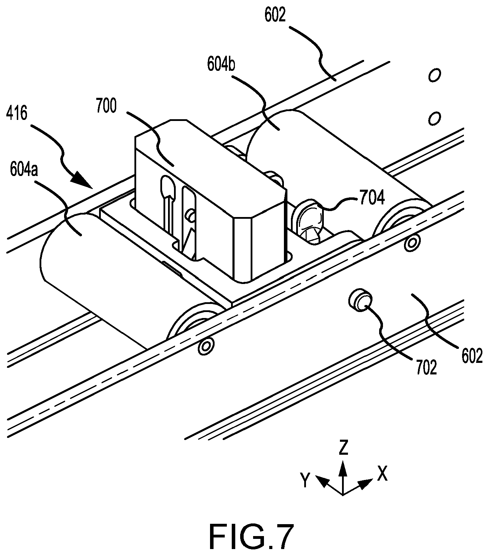

Referring now to FIG. 7, an isometric view of push release vertically actuated ARO restraint integrated into the roller tray 416 of FIG. 6 is illustrated, in accordance with various embodiments. In various embodiments, the push release vertically actuated ARO restraint 700 may be integrated into the roller tray 416 between the sidewalls 602 and between a first roller 604a and a second roller 604b. In various embodiments, the push release vertically actuated ARO restraint 700 is configured to be restrained within the roller tray 416 on a first end that is curved and is positioned under the first roller 604a. In various embodiments, the push release vertically actuated ARO restraint 700 is configured to be restrained within the roller tray 416 on a second end via retractable pins 702 that extend outward from the sidewalls of the push release vertically actuated ARO restraint 700 and through the sidewalls 602 to hold the push release vertically actuated ARO restraint 700 within the roller tray 416. In that regard, retractable pins 702 are retracted into the push release vertically actuated ARO restraint 700 via squeeze handles 704 that, in response to being squeezed together, retract the retractable pins 702 so that the push release vertically actuated ARO restraint 700 may be inserted into or withdrawn from the roller tray 416. In various embodiments, the squeeze handles 704 are spring controlled such that, once released, the retractable pins 702 extend outward from the sidewalls of the push release vertically actuated ARO restraint 700.

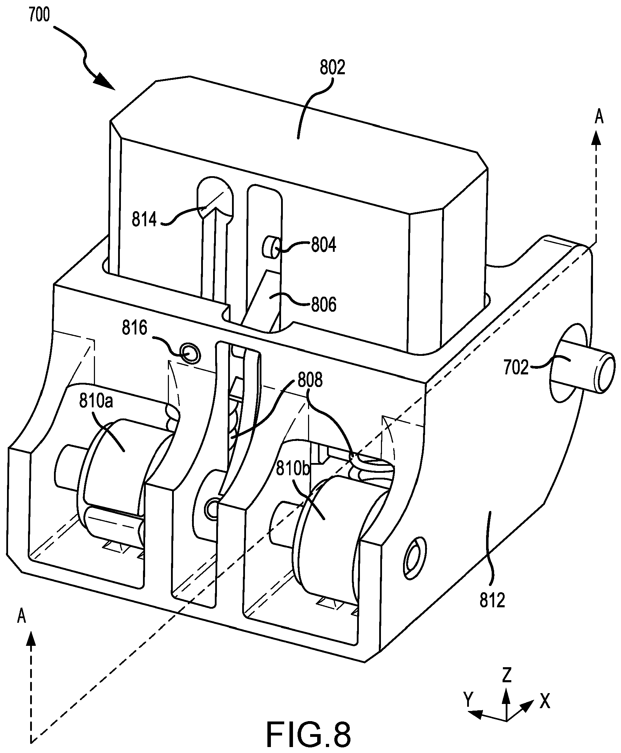

Referring now to FIG. 8, an isometric view of push release vertically actuated ARO restraint is illustrated, in accordance with various embodiments. In various embodiments, the push release vertically actuated ARO restraint 700 includes a restraint head 802, a cam path drive pin 804, a cam path lever 806, compression springs 808, and cam lever springs (C-springs) 810a and 810b contained with housing 812. In various embodiments, the cam path drive pin 804 is located on a side wall of a central void within the restraint head 802. In various embodiments, the restraint head 802 is configured to translate vertically, i.e. up and down, in the z-direction. In various embodiments, the restraint head 802 is limited in movement in the vertical direction by slot 814 formed in the restraint head 802 and pin 816 that protrudes through housing 812 into slot 814. In various embodiments, restraint head 802 includes two voids within the restraint head 802 in which compression springs 808 are positioned. In various embodiments, the compression springs 808 are configured to apply a constant or nearly constant upward force in the positive z-direction on the restraint head 802. In various embodiments, each of the compression springs 808 are held in their respective position within the housing 812 by a post 813 formed in the base of the housing directly below the compression spring.

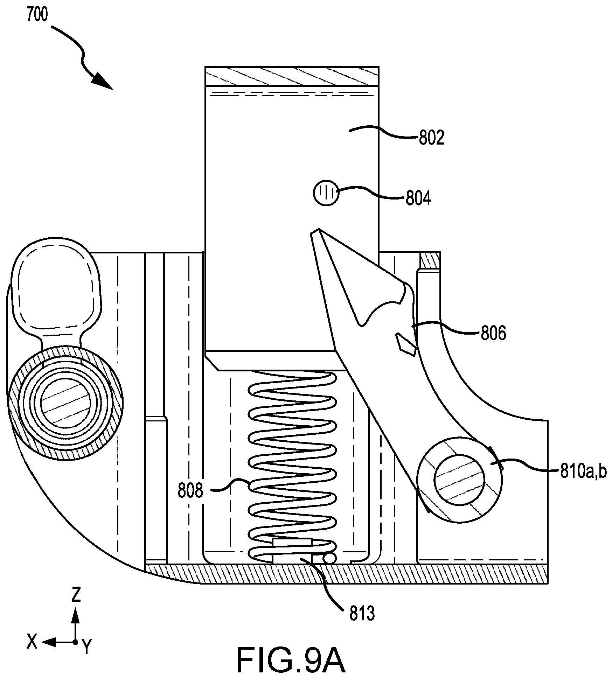

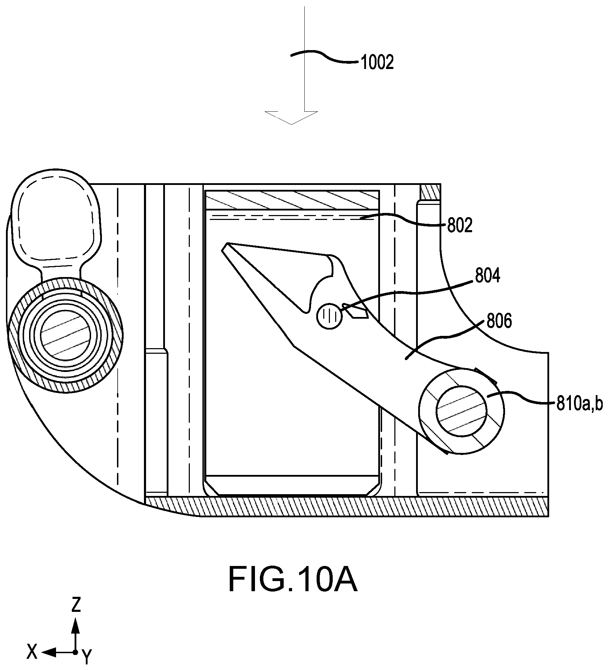

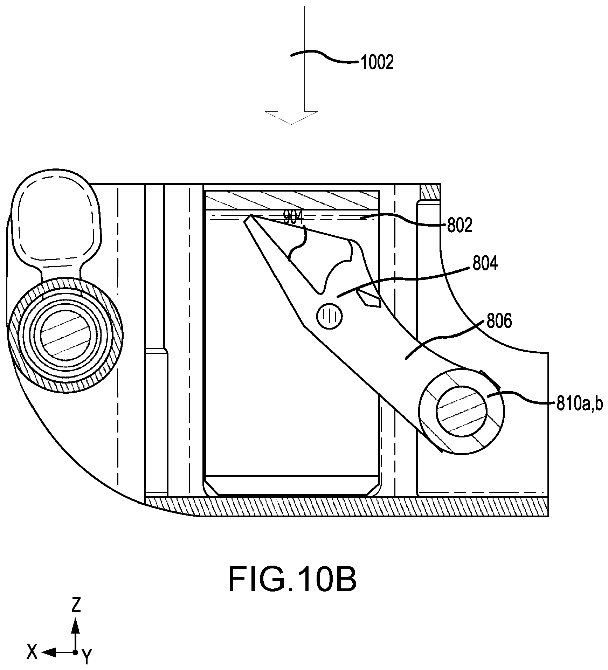

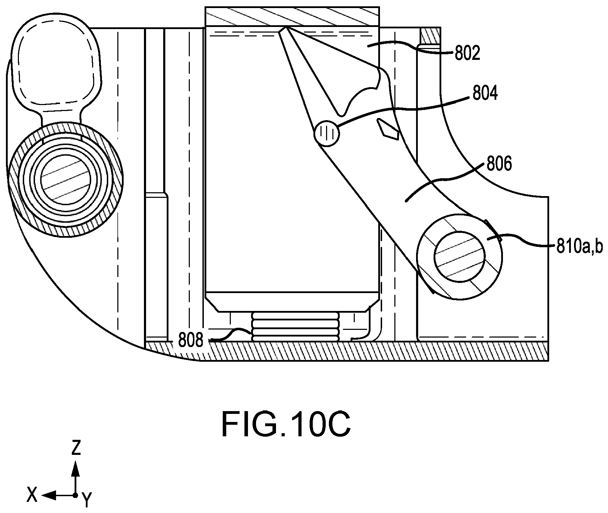

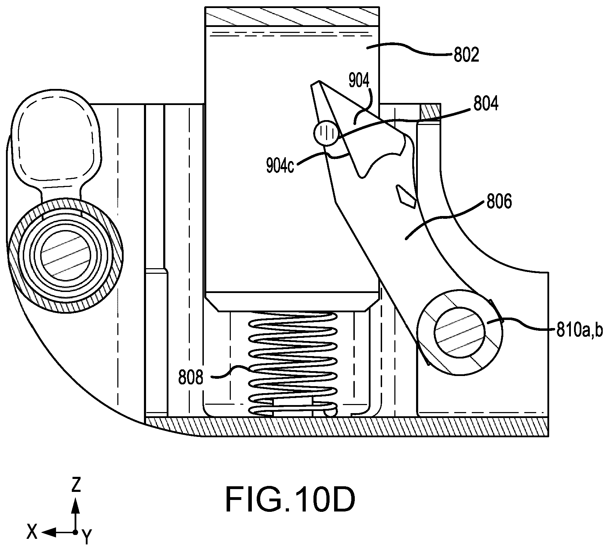

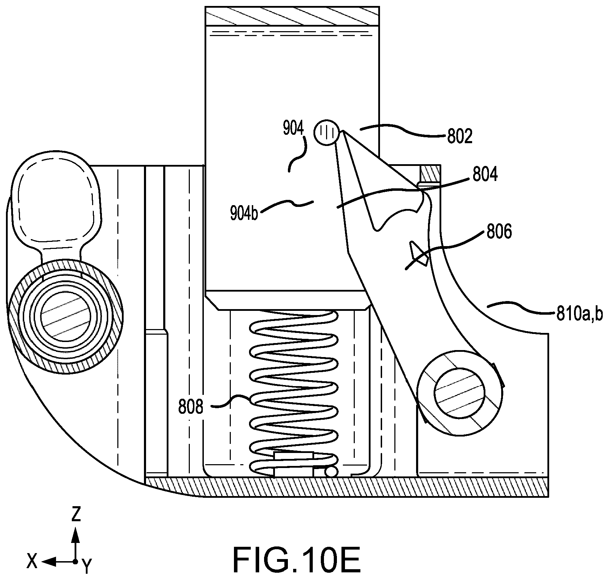

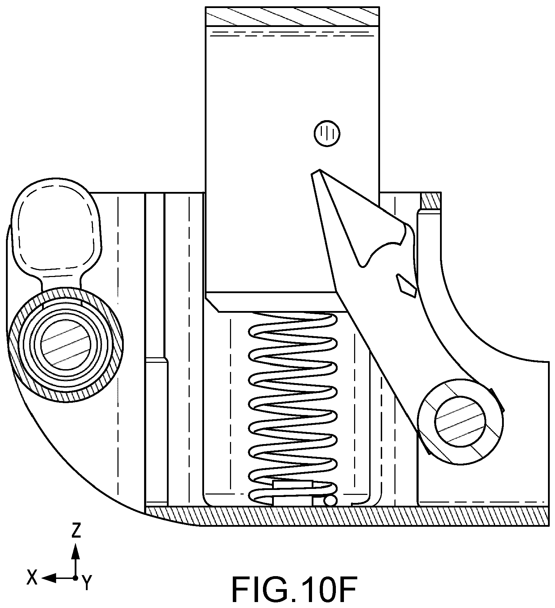

In various embodiments, the C-springs 810a and 810b are configured to provide opposing rotational spring forces to maintain the cam path lever 806 in a predefined angular state, i.e. a neutral state, unless acted upon by the cam path drive pin 804. In that regard, in various embodiments, the C-springs 810 are configured to allow the cam path lever 806 to rotate clockwise or counterclockwise from a neutral state responsive to being acted upon by the cam path drive pin 804, which is coupled to a side wall of a central void, in the y-direction, within the restraint head 802. In that regard, in various embodiments, the cam path lever 806 may be centrally located, in the y-direction, of the housing 812. In various embodiments, a rotation of the cam path lever 806 responsive to being acted upon by the cam path drive pin 804 will be described in detail hereafter with regard to stowing the push release vertically actuated ARO restraint 700 as illustrated in FIGS. 9A-9I and deploying the push release vertically actuated ARO restraint 700 as illustrated in FIGS. 10-10F. In various embodiments, the push release vertically actuated ARO restraint 700 is moved to the stowed position by applying a first downward force, in the negative z-direction, to the top of the restraint head 802 and is moved to the deployed position by applying a second downward force, in the negative z-direction.

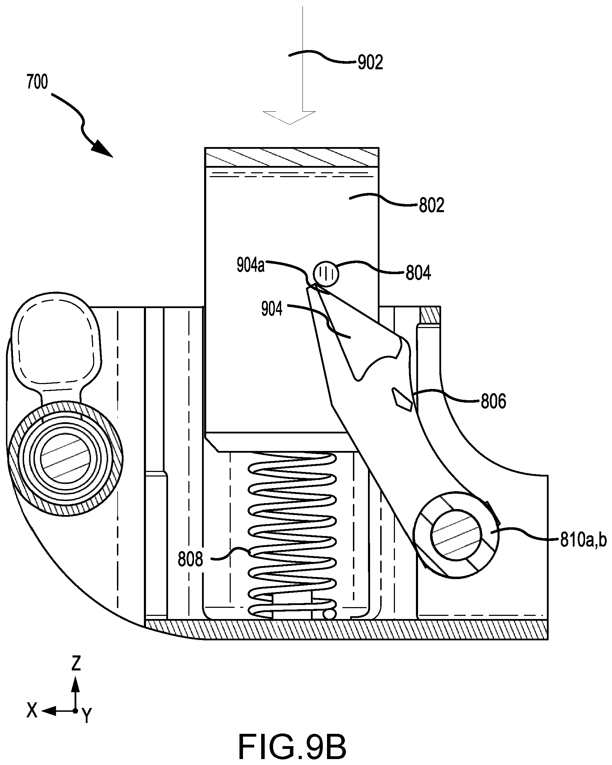

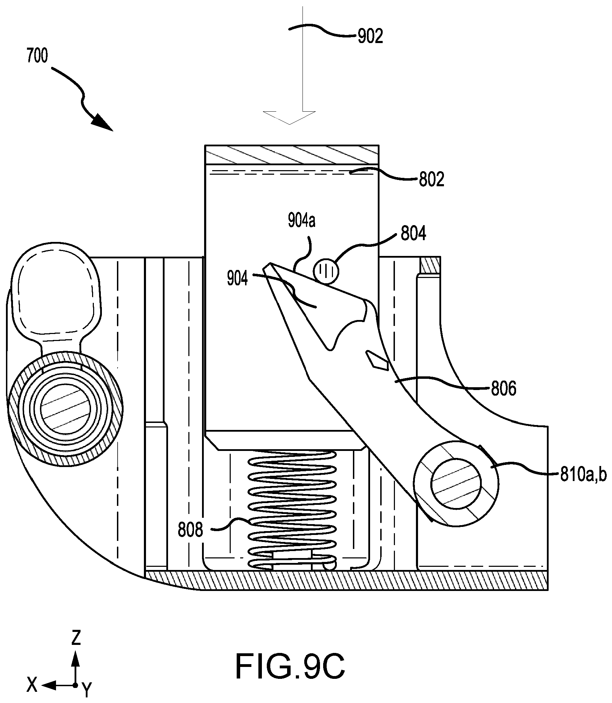

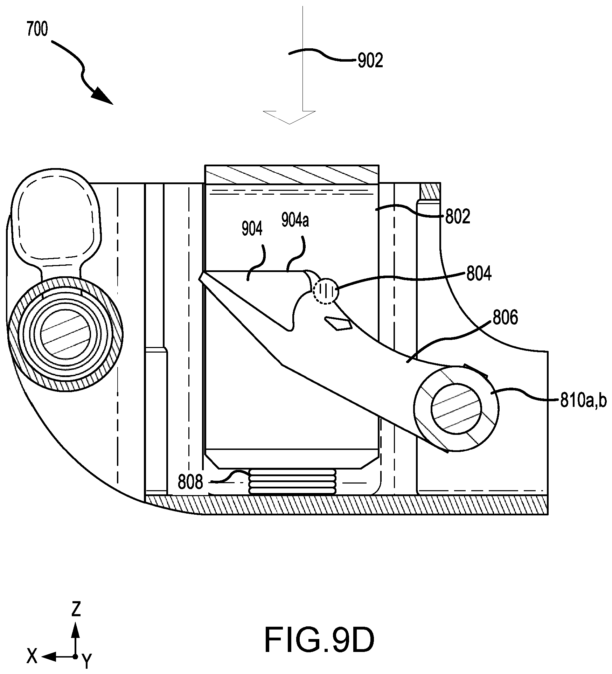

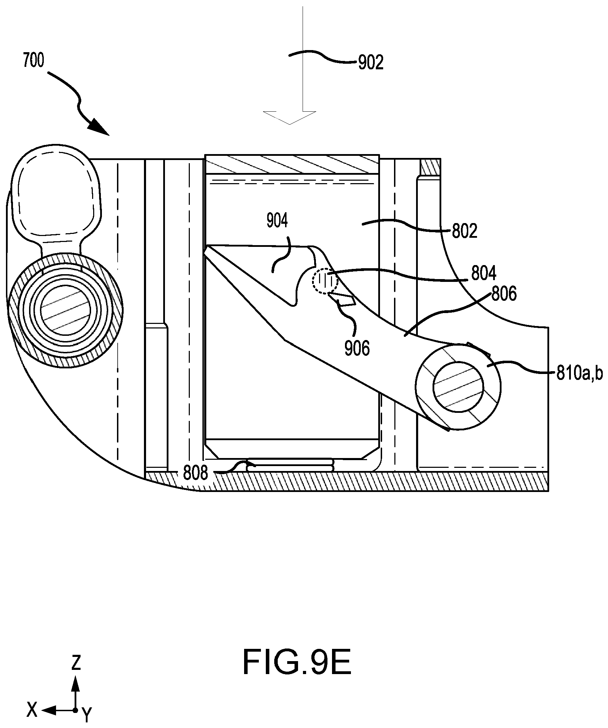

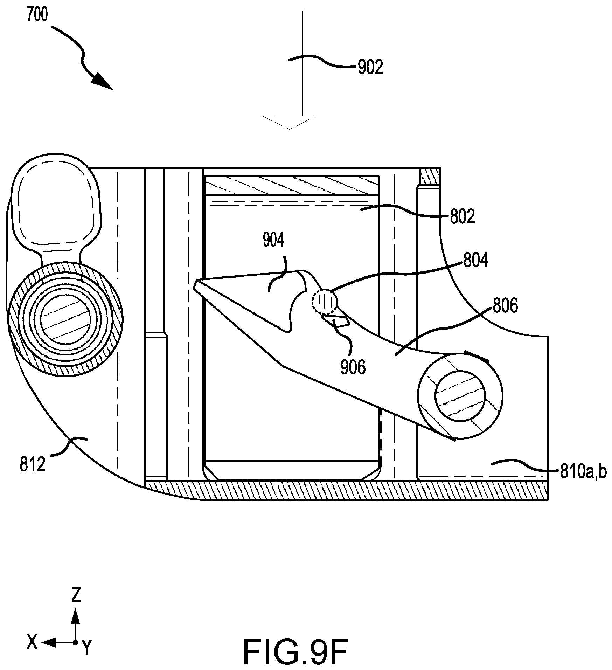

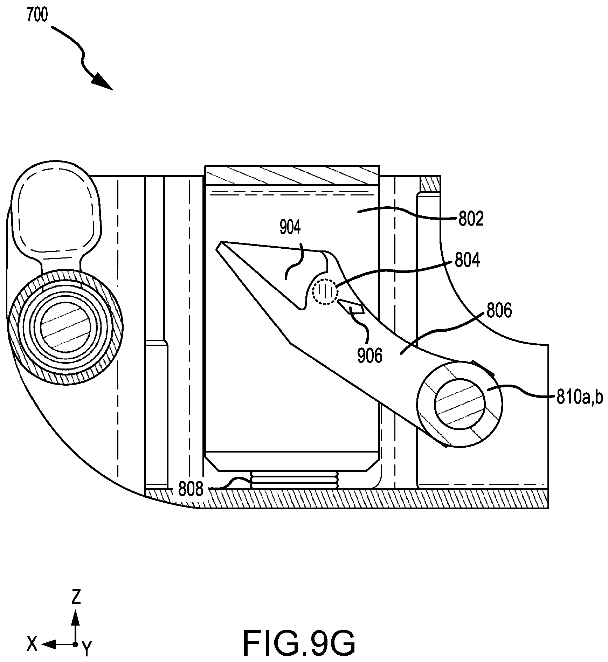

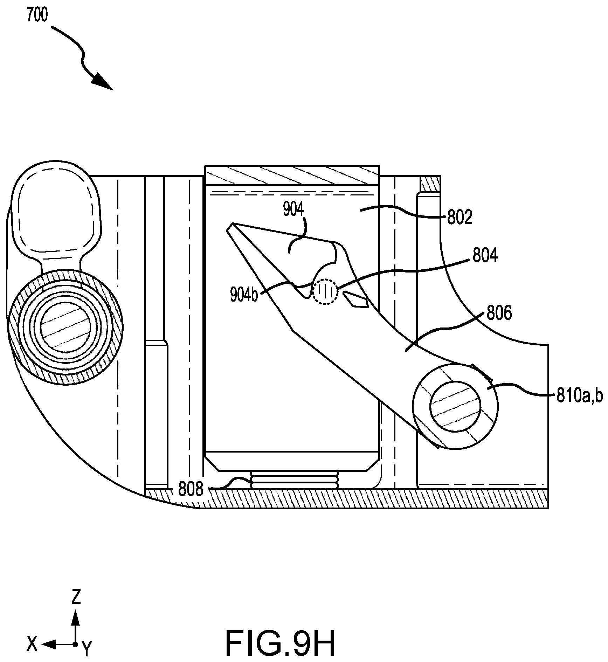

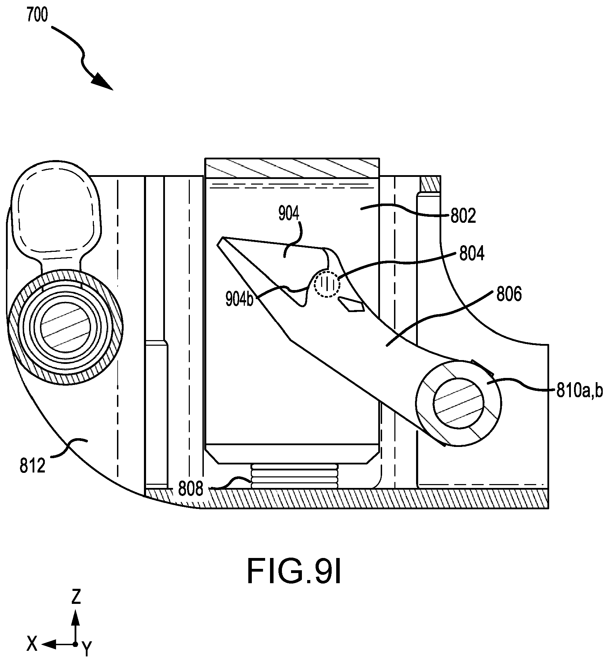

Referring now to FIGS. 9A, 9B, 9C, 9D, 9E, 9F, 9G, 9H, and 9I, a cross-sectional view of a push release vertically actuated ARO restraint, along line A-A of FIG. 8, progressing through a stowing stage is illustrated, in accordance with various embodiments. With regard to FIG. 9A, the push release vertically actuated ARO restraint 700 is in a deployed position with the restraint head 802 fully extended in the positive z-direction. In various embodiments, the compression springs 808 are configured to apply a constant or nearly constant upward force, in the positive z-direction, on the restraint head 802 to hold the restraint head 802 in the deployed position. In various embodiments, the C-springs 810a and 810b are configured to provide opposing rotational spring forces to maintain the cam path lever 806 in a predefined angular state. In various embodiments, since no downward force is being applied to the restraint head 802, the cam path drive pin 804 has not engaged with the cam path lever 806.

With regard to FIG. 9B, in various embodiments, responsive to a first downward force 902, in the negative z-direction, being applied, the restraint head 802 is moved downward, in the negative z-direction, compressing the compression springs 808. In various embodiments, responsive to the first downward force 902, the cam path drive pin 804 that is coupled to the restraint head 802 makes initial contact with a first face 904a of a protruding tip 904, in the y-direction, of a distal end of the cam path lever 806 thereby causing the cam path lever 806 to rotate in a counterclockwise direction. In various embodiments, the first face 904a of the cam path lever 806 is kept in contact with the cam path drive pin 804 due to the opposing rotational forces provided by the C-springs 810a and 810b.

With regard to FIG. 9C, in various embodiments, responsive to the first downward force 902, in the negative z-direction, being applied to the restraint head 802, the cam path drive pin 804 that is coupled to the restraint head 802 travels along first face 904a causing the cam path lever 806 to further rotate in the counterclockwise direction. In various embodiments, the cam path lever 806 is kept in contact with the cam path drive pin due to the opposing rotational forces provided by the C-springs 810a and 810b.

With regard to FIG. 9D, in various embodiments, responsive to the first downward force 902, in the negative z-direction, being applied to the restraint head 802, the cam path drive pin 804 that is coupled to the restraint head 802 passes the first face 904a and, with regard to FIG. 9E, in various embodiments, the cam path drive pin 804 contacts an over-travel stop 906 that protrudes, in the y-direction, from the cam path lever 806. With regard to FIG. 9F, in various embodiments, responsive to the first downward force 902, in the negative z-direction, being applied to the restraint head 802 until the restraint head contacts the bottom of the housing 812, the cam path drive pin 804 being in contact with the contacts an over-travel stop 906 causes the cam path lever 806 to further rotate in the counterclockwise direction.

With regard to FIG. 9G, in various embodiments, responsive to an absence of the downward force being applied to the restraint head 802, the opposing rotational forces, in a clockwise direction, provided by the C-springs 810a and 810b causes the cam path lever 806 to rotate in the clockwise direction and, along with the upward force, in the positive z-direction, caused by the compression springs 808 on the restraint head 802, the over-travel stop 906 clears the cam path drive pin 804. With regard to FIG. 9H, in various embodiments, with the rotation of the cam path lever 806, in the clockwise direction, caused by the opposing rotational forces of C-springs 810a and 810b and the upward force, in the positive z-direction, caused by the compression springs 808 on the restraint head 802, the cam path drive pin 804 makes contact with a second face 904b of a protruding tip 904. With regard to FIG. 9I, in various embodiments, the movement of the restraint head 802, in the positive z-direction, caused by the compression springs 808 on the restraint head 802, causes the cam path drive pin 804 to move upward and rest in the curved portion of the second face 904b of a protruding tip 904, thereby placing the push release vertically actuated ARO restraint 700 in a stowed position. It is noted that, while a top of the restraint head is above a top of the housing 812, the top of the restraint head 802 will not interfere with a movement of a palletized cargo or a container as the top of the restraint head 802 in the stowed position is below a top of the first roller 604a and the second roller 604b as is illustrated in FIG. 7.

Referring now to FIGS. 10A, 10B, 10C, 10D, 10E, and 10F, a cross-sectional view of a push release vertically actuated ARO restraint, along line A-A of FIG. 8, progressing through a deploying stage is illustrated, in accordance with various embodiments. With regard to FIG. 10A, in various embodiments, responsive to a second downward force 1002, in the negative z-direction, being applied, the restraint head 802 is moved downward, in the negative z-direction, compressing the compression springs 808. Responsive to this movement, the cam path lever 806 is free to rotate back to a neutral state. With regard to FIG. 10B, in various embodiments, the cam path lever 806 begins to rotate in a clockwise direction to the neutral state due to the opposing rotational forces provided by the C-springs 810a and 810b.

With regard to FIG. 10C, in various embodiments, with the second downward force 1002, in the negative z-direction, removed, the compression springs 808 provide an upward force, in the positive z-direction, on the restraint head 802. With regard to FIG. 10D, in various embodiments, the continued upward force, in the positive z-direction, on the restraint head 802 caused by the expansion of the compression springs 808 may cause the cam path drive pin 804 to contact a third face 904c of the protruding tip 904.

With regard to FIG. 10E, in various embodiments, the contact of the cam path drive pin 804 with the third face 904c causes the cam path lever 806 to temporarily rotate clockwise past the neutral state. With regard to FIG. 10F, once the compression springs 808 apply the constant or nearly constant upward force, in the z-direction, the restraint head 802 is held in the deployed position and the cam path lever 806 rotates counterclockwise back to the neutral state via rotational opposing forces of the C-springs 810a and 810b.

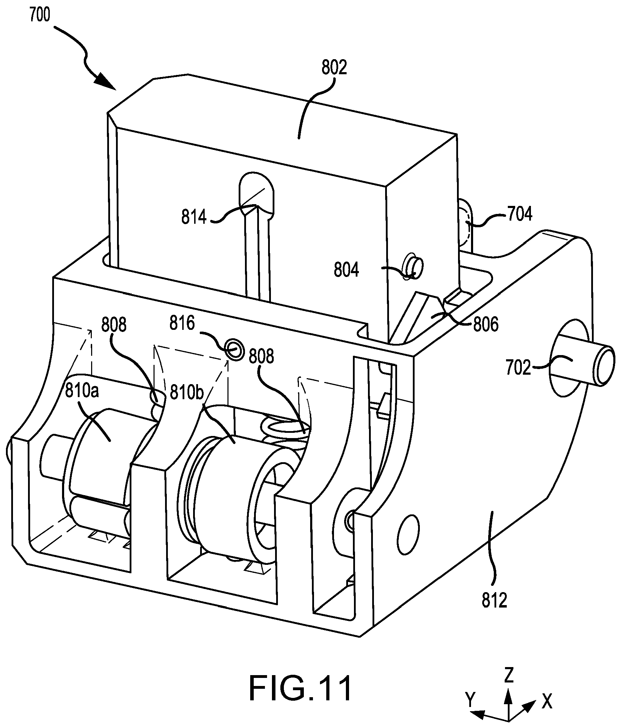

Referring now to FIG. 11, an isometric view of push release vertically actuated ARO restraint in a different configuration is illustrated, in accordance with various embodiments. In various embodiments, as with the push release vertically actuated ARO restraint 700 in FIG. 8, the push release vertically actuated ARO restraint 700 in FIG. 11 includes a restraint head 802, a cam path drive pin 804, a cam path lever 806, compression springs 808, and cam lever springs (C-springs) 810a and 810b contained with housing 812. In various embodiments, the restraint head 802 is configured to translate vertically, i.e. up and down, in the z-direction. In various embodiments, the restraint head 802 is limited in movement in the vertical direction by slot 814 formed in the restraint head 802 and pin 816 that protrudes through housing 812 into slot 814. In various embodiments, restraint head 802 includes two voids within the restraint head 802 in which compression springs 808 are positioned. In various embodiments, the compression springs 808 are configured to apply a constant or nearly constant upward force in the positive z-direction on the restraint head 802. In various embodiments, each of the compression springs 808 are held in their respective position within the housing 812 by a post formed in the base of the housing directly below the compression spring.

In various embodiments, rather than the cam path lever 806 and the cam path drive pin 804 being located in the center, in the y-direction, of the restraint head 802 as illustrated in FIG. 8, the cam path drive pin 804 are located on an exterior portion, in the y-direction of the restraint head 802 and the cam path lever 806 may be located adjacent to the exterior portion. In various embodiments, the C-springs 810a and 810b are configured to provide opposing rotational spring forces to maintain the cam path lever 806 in a predefined angular state. In that regard, in various embodiments, the C-springs 810 are configured to allow the cam path lever 806 to rotate clockwise or counterclockwise from a neutral state responsive to being acted upon by the cam path drive pin 804, which is coupled to the restraint head 802. In various embodiments, a rotation of the cam path lever 806 responsive to being acted upon by the cam path drive pin 804 will be described in detail hereafter with regard to stowing the push release vertically actuated ARO restraint 700 as illustrated in FIGS. 9A-9I and deploying the push release vertically actuated ARO restraint 700 as illustrated in FIGS. 10-10F. In various embodiments, the push release vertically actuated ARO restraint 700 is moved to the stowed position by applying a first downward force, in the negative z-direction, to the top of the restraint head 802 and is moved to the deployed position by applying a second downward force, in the negative z-direction.

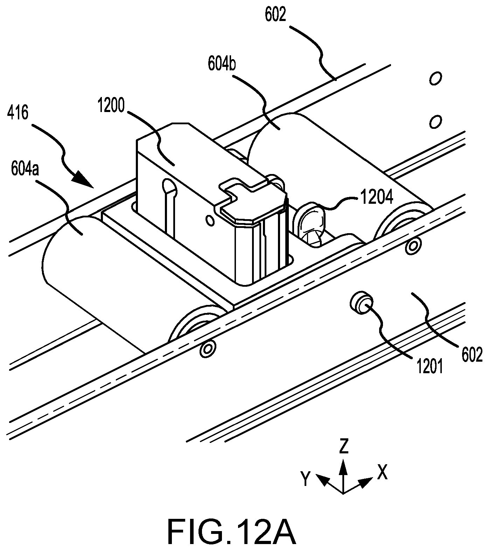

Referring now to FIG. 12A, an isometric view of deployed locking lever vertically actuated ARO restraint into the roller tray 416 of FIG. 6 is illustrated, in accordance with various embodiments. In various embodiments, the locking lever vertically actuated ARO restraint 1200 may be integrated into the roller tray 416 between the sidewalls 602 and between a first roller 604a and a second roller 604b. In various embodiments, the locking lever vertically actuated ARO restraint 1200 is configured to be restrained within the roller tray 416 on a first end that is curved and is positioned under the first roller 604a. In various embodiments, the locking lever vertically actuated ARO restraint 1200 is configured to be restrained within the roller tray 416 on a second end via retractable pins 1201 that extend outward from the sidewalls of the locking lever vertically actuated ARO restraint 1200 and through the sidewalls 602 to hold the locking lever vertically actuated ARO restraint 1200 within the roller tray 416. In that regard, retractable pins 1201 are retracted into the locking lever vertically actuated ARO restraint 1200 via squeeze handles 1204 that, in response to being squeezed together, retract the retractable pins 1201 so that the locking lever vertically actuated ARO restraint 1200 may be inserted into or withdrawn from the roller tray 416. In various embodiments, the squeeze handles 1204 are spring controlled such that, once released, the retractable pins 1201 extend outward from the sidewalls of the locking lever vertically actuated ARO restraint 1200.

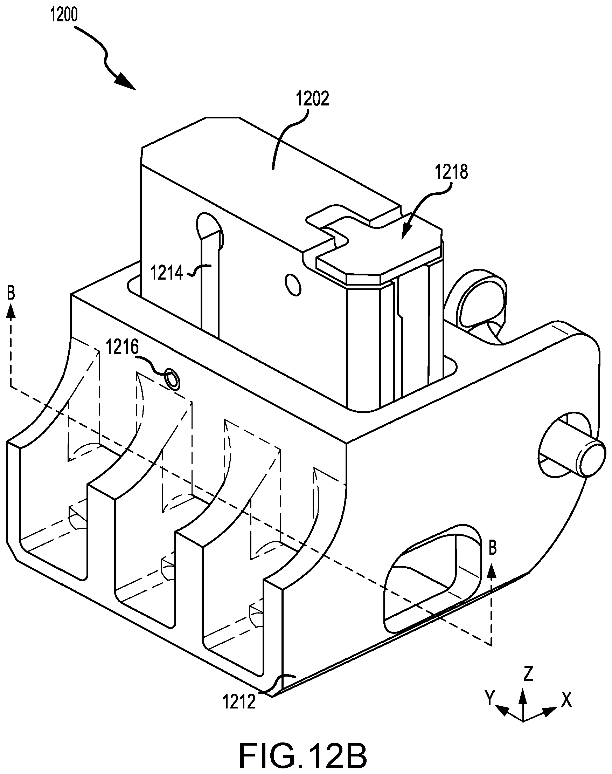

Referring now to FIG. 12B, an isometric view of locking lever vertically actuated ARO restraint in the deployed position is illustrated, in accordance with various embodiments. In various embodiments, the locking lever vertically actuated ARO restraint 1200 includes a restraint head 1202, a compression spring, and locking lever 1218 contained with housing 1212. In various embodiments, the restraint head 1202 is configured to translate vertically, i.e. up and down, in the z-direction. In various embodiments, the restraint head 1202 is limited in movement in the vertical direction by slot 1214 formed in the restraint head 1202 and pin 1216 that protrudes through housing 1212 into slot 1214. In various embodiments, restraint head 1202 includes a void within the restraint head 1202 in which the compression spring is positioned. In various embodiments, the compression spring is configured to apply a constant or nearly constant upward force in the positive z-direction on the restraint head 1202.

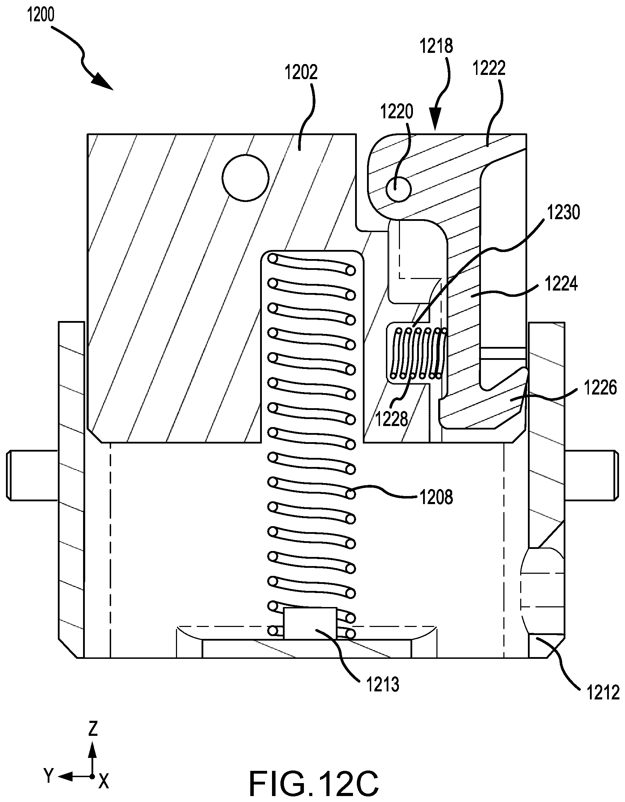

Referring now to FIG. 12C, a cross-sectional view of a locking lever vertically actuated ARO restraint in the deployed position, along line B-B of FIG. 12B, is illustrated, in accordance with various embodiments. In various embodiments, the locking lever vertically actuated ARO restraint 1200 is in a deployed position with the restraint head 1202 fully extended in the positive z-direction. In various embodiments, the compression spring 1208 is configured to apply a constant or nearly constant upward force, in the positive z-direction, on the restraint head 1202 to hold the restraint head 1202 in the deployed position. In various embodiments, the compression spring 1208 is held in place within the housing 1212 by a post 1213 formed in the base of the housing directly below the compression spring 1208. In various embodiments, the locking lever 1218 is pivotably coupled to the restraint head 1202 via pin 1220. In various embodiments, the locking lever includes a tab portion 1222, a post portion 1224, and a hook portion 1226. In various embodiments, the tab portion 1222 is coupled to the hook portion 1226 via the post portion 1224. In various embodiments, in the deployed positioned, the hook portion 1226 is configured to translate along a sidewall of the housing 1212 due to a horizontal force being applied to the post portion 1224 via a compression spring 1228 positioned within void 1230 of the restraint head 1202.

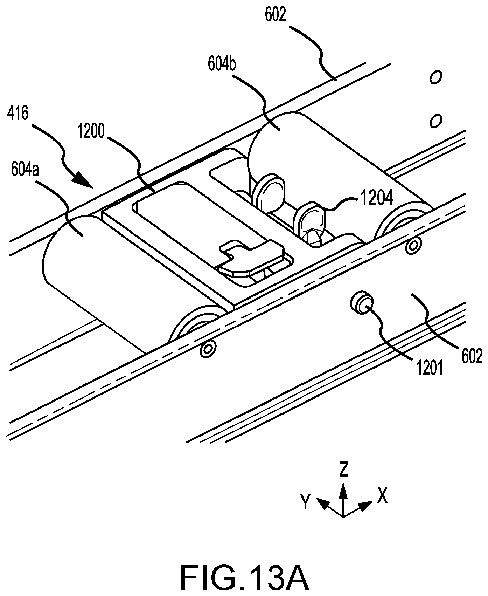

Referring now to FIG. 13A, an isometric view of stowed locking lever vertically actuated ARO restraint into the roller tray 416 of FIG. 6 is illustrated, in accordance with various embodiments. In various embodiments, the locking lever vertically actuated ARO restraint 1200 may be integrated into the roller tray 416 between the sidewalls 602 and between a first roller 604a and a second roller 604b. In various embodiments, the locking lever vertically actuated ARO restraint 1200 is configured to be restrained within the roller tray 416 on a first end that is curved and is positioned under the first roller 604a. In various embodiments, the locking lever vertically actuated ARO restraint 1200 is configured to be restrained within the roller tray 416 on a second end via retractable pins 1201 that extend outward from the sidewalls of the locking lever vertically actuated ARO restraint 1200 and through the sidewalls 602 to hold the locking lever vertically actuated ARO restraint 1200 within the roller tray 416. In that regard, retractable pins 1201 are retracted into the locking lever vertically actuated ARO restraint 1200 via squeeze handles 1204 that, in response to being squeezed together, retract the retractable pins 1201 so that the locking lever vertically actuated ARO restraint 1200 may be inserted into or withdrawn from the roller tray 416. In various embodiments, the squeeze handles 1204 are spring controlled such that, once released, the retractable pins 1201 extend outward from the sidewalls of the locking lever vertically actuated ARO restraint 1200.

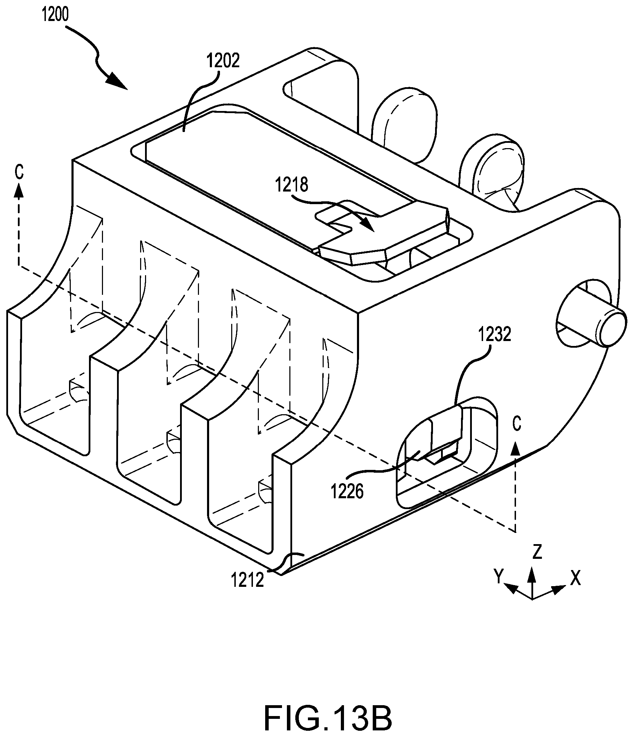

Referring now to FIG. 13B, an isometric view of locking lever vertically actuated ARO restraint in the stowed position is illustrated, in accordance with various embodiments. The locking lever vertically actuated ARO restraint 1200 in FIG. 13B is the same as the locking lever vertically actuated ARO restraint 1200 illustrated in FIG. 12B but in the stowed position. In various embodiments, in the stowed position, the hook portion 1226 of the locking lever 1218 protrudes through opening 1232 due to the force applied by the compression spring 1228 positioned within the void 1230 of the restraint head 1202 as described in FIG. 12C. In various embodiments, the hook portion 1226 is configured to protrude through the opening 1232 due to a rotation about pin 1220 which coupled the locking lever 1218 to the restraint head 1202.

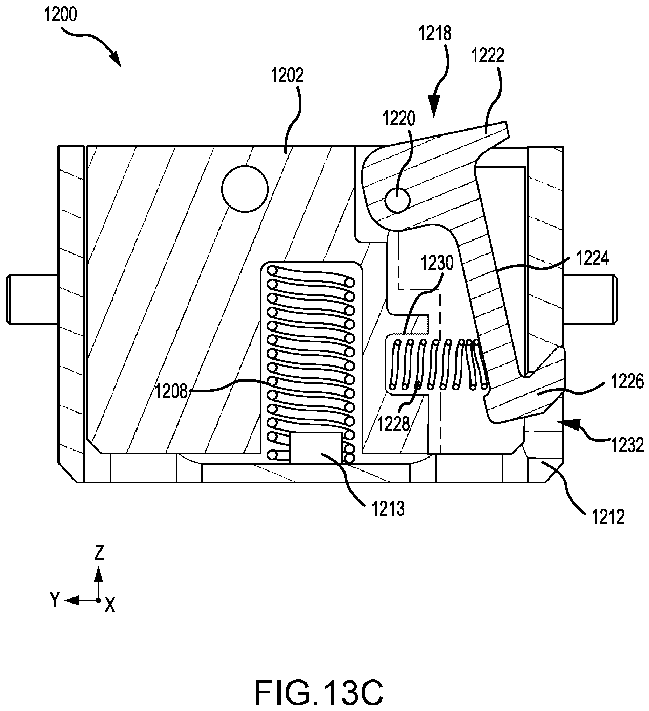

Referring now to FIG. 13C, a cross-sectional view of a locking lever vertically actuated ARO restraint in the stowed position, along line C-C of FIG. 13B, is illustrated, in accordance with various embodiments. In various embodiments, the locking lever vertically actuated ARO restraint 1200 is in a stowed position with the restraint head 1202 fully contained with the housing 1212. In various embodiments, the locking lever 1218, which is pivotably coupled to the restraint head 1202 via the pin 1220, is rotated counterclockwise due to the horizontal force being applied to the post portion 1224 via the compression spring 1228 positioned within void 1230 of the restraint head 1202. In that regard, in various embodiments, the hook portion 1226 protrudes through the opening 1232 in the sidewall of the housing 1212 and locks the restraint head 1202 in the stowed position. In various embodiments, in the stowed position, the tab portion 1222 of the locking lever 1218 is also rotated upward in the positive z-direction thereby providing for releasing the restraint head 1202 from the stowed position when acted upon by a downward force, i.e. in the negative z-direction. In that regard, in response to the tab portion 1222 being acted upon by a downward force, such as by a user depressing the tab portion 122, the locking lever is rotated clockwise and the hook portion 1226 is withdrawn from the opening 1232 in the sidewall of the housing 1212 thereby allowing the restraint head 1202 to translate vertically upward, in the positive z-direction due to the compression spring 1208 being is configured to apply a constant or nearly constant upward force, in the positive z-direction, on the restraint head 1202.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Furthermore, no element, component, or method step in the present invention is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An anti-roll out restraint assembly (700) for a cargo handling system (400), comprising:
a housing (812); and
a restraint head (802) coupled to the housing (812), the restraint head (802) configured to vertically translate between a deployed position and a stowed position and between the stowed position and the deployed position;
a cam path drive pin (804) coupled to the restraint head (802);
a cam path lever (806) coupled to the housing (812), the cam path lever (806) configured to restrain the restraint head (802) via the cam path drive pin (804) responsive to the restraint head (802) being in the stowed position; and
a set of compression springs (808), the set of compression springs (808) configured to apply at least one of a constant or nearly constant upward force on the restraint head (802).

2. The anti-roll out restraint assembly (700) of claim 1, further comprising:
a set of C-springs (810) coupled to the housing (812), the set of C-springs (810) configured to provide opposing rotational spring forces to maintain the cam path lever (806) in a neutral state unless acted upon by the cam path drive pin (804).

3. The anti-roll out restraint assembly (700) of claim 1 or claim 2, wherein, responsive to the anti-roll out restraint assembly (700) in the deployed position, the cam path lever (806) further comprises a protruding tip (904) configured to engage with the cam path drive pin (804) responsive to a first downward force being applied to the restraint head (802) such that the restraint head (802) translates in a downward direction.

4. The anti-roll out restraint assembly (700) of claim 3, wherein, responsive to the cam path drive pin (804) engaging with a first face of the protruding tip (904), the cam path lever (806) rotates in a first direction until the cam path drive pin (804) disengages with the first face (904a) of the protruding tip (904).

5. The anti-roll out restraint assembly (700) of claim 4, wherein the cam path lever (806) further comprises an over-travel stop (906) configured to engage with the cam path drive pin (804) responsive to the cam path drive pin (804) disengaging with the first face (904a) of the protruding tip (904).

6. The anti-roll out restraint assembly (700) of claim 5, wherein, responsive to the cam path drive pin (804) disengaging with the over-travel stop (906) and responsive to the first downward force ceasing, the cam path lever (806) rotates in a second direction opposite the first direction until the cam path drive pin (804) engages with a second face (904b) of the protruding tip (904), and wherein the second face (904b) is a curved face in which the cam path drive pin (804) is configured to rest within thereby placing the anti-roll out restraint assembly (700) in the stowed position due to the constant or nearly constant upward force on the restraint head (802) provided by the set of compression springs (808).

7. The anti-roll out restraint assembly (700) of any preceding claim, wherein, responsive to the anti-roll out restraint assembly (700) in the stowed position, the cam path lever (806) further comprises a protruding tip (904) configured to engage with the cam path drive pin (804) and wherein, responsive to a second downward force being applied to the restraint head (802), the cam path drive pin (804) disengages with a second face (904b) of the protruding tip (904) thereby allowing the cam path lever (806) to rotate in a second direction.

8. The anti-roll out restraint assembly (700) of claim 7, wherein responsive to the cam path lever (806) rotating in the second direction and the second downward force disengaging, the restraint head (802) is configured to translate in upward direction due to the constant or nearly constant upward force on the restraint head (802) provided by the set of compression springs (808) to the deployed position.

9. The anti-roll out restraint assembly (700) of any preceding claim, wherein the restraint head (802) further comprises a slot (814), wherein the housing (812) further comprises a pin (816), and wherein the restraint head (802) is limited in movement in a vertical direction by the pin (816) protruding through the housing (812) into the slot (814).

10. The anti-roll out restraint assembly (700) of any preceding claim, wherein the restraint head (812) comprises a central void (1230) in which the cam path drive pin (816) is coupled to a side wall of the central void (1230) and wherein the cam path lever (806) is centrally located within the housing (812).

11. The anti-roll out restraint assembly (700) of any preceding claim, wherein the cam path drive pin (804) is coupled to an exterior portion of the restraint head (802) and wherein the cam path lever (806) is located adjacent to the exterior portion of the restraint head (802) within the housing (812).

12. A cargo handling system (400), comprising:
a roller tray (416);
a plurality of rollers (604), the plurality of rollers (604) coupled between sidewalls (602) of the roller tray (416) and spaced apart from one another along a length of the roller tray (416);
the anti-roll out restraint assembly (700) of any preceding claim positioned between at least two rollers of the plurality of rollers (604).

## Patentansprüche

1. Antirollrückhaltebaugruppe (700) für ein Frachtumschlagsystem (400), umfassend:
ein Gehäuse (812); und
einen Rückhaltekopf (802), der mit dem Gehäuse (812) gekoppelt ist, wobei der Rückhaltekopf (802) dazu konfiguriert ist, sich vertikal zwischen einer ausgefahrenen Position und einer eingefahrenen Position und zwischen der eingefahrenen Position und der ausgefahrenen Position zu verschieben;
einen Nockenbahnantriebsstift (804), der mit dem Rückhaltekopf (802) gekoppelt ist;
einen Nockenbahnhebel (806), der mit dem Gehäuse (812) gekoppelt ist, wobei der Nockenbahnhebel (806) dazu konfiguriert ist, den Rückhaltekopf (802) als Reaktion darauf, dass sich der Rückhaltekopf (802) in der eingefahrenen Position befindet, über den Nockenbahnantriebsstift (804) zurückzuhalten; und
einen Satz von Druckfedern (808), wobei der Satz von Druckfedern (808) dazu konfiguriert ist, mindestens eines von einer konstanten oder nahezu konstanten Aufwärtskraft auf den Rückhaltekopf (802) auszuüben.

2. Antirollrückhaltebaugruppe (700) nach Anspruch 1, ferner umfassend:
einen Satz von C-Federn (810), die mit dem Gehäuse (812) gekoppelt sind, wobei der Satz von C-von Federn (810) dazu konfiguriert ist, entgegengesetzte Drehfederkräfte bereitzustellen, um den Nockenbahnhebel (806) in einem neutralen Zustand zu halten, sofern er nicht durch den Nockenbahnantriebsstift (804) betätigt wird.

3. Antirollrückhaltebaugruppe (700) nach Anspruch 1 oder Anspruch 2, wobei der Nockenbahnhebel (806) als Reaktion darauf, dass sich die Antirollrückhaltebaugruppe (700) in der ausgefahrenen Position befindet, ferner eine vorstehende Spitze umfasst (904), die dazu konfiguriert ist, mit dem Nockenbahnantriebsstift (804) als Reaktion darauf, dass eine erste Abwärtskraft auf den Rückhaltekopf (802) ausgeübt wird, derart in Eingriff zu kommen, dass sich der Rückhaltekopf (802) in einer Abwärtsrichtung verschiebt.

4. Antirollrückhaltebaugruppe (700) nach Anspruch 3, wobei sich der Nockenbahnhebel (806) als Reaktion darauf, dass der Nockenbahnantriebsstift (804) mit einer ersten Fläche der vorstehenden Spitze (904) in Eingriff kommt, in eine erste Richtung dreht, bis sich der Nockenbahnantriebsstift (804) von der ersten Fläche (904a) der vorstehenden Spitze (904) löst.

5. Antirollrückhaltebaugruppe (700) nach Anspruch 4, wobei der Nockenbahnhebel (806) ferner einen Überhubanschlag (906) umfasst, der dazu konfiguriert ist, als Reaktion darauf, dass sich der Nockenbahnantriebsstift (804) von der ersten Fläche (904a) der vorstehenden Spitze (904) löst, mit dem Nockenbahnantriebsstift (804) in Eingriff zu kommen.

6. Antirollrückhaltebaugruppe (700) nach Anspruch 5, wobei sich der Nockenbahnhebel (806) als Reaktion darauf, dass sich der Nockenbahnantriebsstift (804) von dem Überhubanschlag (906) löst, und als Reaktion darauf, dass die erste Abwärtskraft aufhört, in eine zweite Richtung, die der ersten Richtung entgegengesetzt ist, dreht, bis der Nockenbahnantriebsstift (804) mit einer zweiten Fläche (904b) der vorstehenden Spitze (904) in Eingriff kommt, und wobei die zweite Fläche (904b) eine gekrümmte Fläche ist, in der der Nockenbahnantriebsstift (804) dazu konfiguriert ist, darin zu ruhen, wodurch die Antirollrückhaltebaugruppe (700) aufgrund der konstanten oder nahezu konstanten Aufwärtskraft auf den Rückhaltekopf (802), die durch den Satz von Druckfedern (808) bereitgestellt wird, in die eingefahrene Position gebracht wird.

7. Antirollrückhaltebaugruppe (700) nach einem der vorstehenden Ansprüche, wobei der Nockenbahnhebel (806) als Reaktion darauf, dass sich die Antirollrückhaltebaugruppe (700) in der eingefahrenen Position befindet, ferner eine vorstehende Spitze umfasst (904), die dazu konfiguriert ist, mit dem Nockenbahnantriebsstift (804) in Eingriff zu kommen, und wobei der Nockenbahnantriebsstift (804) als Reaktion darauf, dass eine zweite Abwärtskraft auf den Rückhaltekopf (802) ausgeübt wird, sich von einer zweiten Fläche (904b) der vorstehenden Spitze (904) löst, wodurch dem Nockenbahnhebel (806) ermöglicht wird, sich in eine zweite Richtung zu drehen.

8. Antirollrückhaltebaugruppe (700) nach Anspruch 7, wobei als Reaktion darauf, dass sich der Nockenbahnhebel (806) in die zweite Richtung dreht und sich die zweite Abwärtskraft löst, der Rückhaltekopf (802) dazu konfiguriert ist, sich aufgrund der konstanten oder nahezu konstanten Aufwärtskraft auf den Rückhaltekopf (802), die durch den Satz von Druckfedern (808) bereitgestellt wird, in Aufwärtsrichtung in die ausgefahrene Position zu verschieben.

9. Antirollrückhaltebaugruppe (700) nach einem der vorstehenden Ansprüche, wobei der Rückhaltekopf (802) ferner einen Schlitz (814) umfasst, wobei das Gehäuse (812) ferner einen Stift (816) umfasst, und wobei der Rückhaltekopf (802) in einer vertikalen Richtung durch den Stift (816), der durch das Gehäuse (812) in den Schlitz (814) vorsteht, in seiner Bewegung begrenzt ist.

10. Antirollrückhaltebaugruppe (700) nach einem der vorstehenden Ansprüche, wobei der Rückhaltekopf (812) einen mittigen Hohlraum (1230) umfasst, in dem der Nockenbahnantriebsstift (816) mit einer Seitenwand des mittigen Hohlraums (1230) gekoppelt ist, und wobei der Nockenbahnhebel (806) mittig innerhalb des Gehäuses (812) angeordnet ist.

11. Antirollrückhaltebaugruppe (700) nach einem der vorstehenden Ansprüche, wobei der Nockenbahnantriebsstift (804) mit einem äußeren Abschnitt des Rückhaltekopfs (802) gekoppelt ist und wobei der Nockenbahnhebel (806) benachbart zu dem äußeren Abschnitt des Rückhaltekopfs (802) innerhalb des Gehäuses (812) angeordnet ist.

12. Frachtumschlagsystem (400), umfassend:
eine Rollenwanne (416);
eine Vielzahl von Rollen (604), wobei die Vielzahl von Rollen (604) zwischen Seitenwänden (602) der Rollenwanne (416) gekoppelt und entlang einer Länge der Rollenwanne (416) voneinander beabstandet sind;
die Antirollrückhaltebaugruppe (700) nach einem der vorstehenden Ansprüche, die zwischen mindestens zwei Rollen der Vielzahl von Rollen (604) positioniert ist.

## Revendications

1. Ensemble de retenue anti-sortie par roulement (700) pour un système de manutention de fret (400), comprenant :
un boîtier (812) ; et
une tête de retenue (802) couplée au boîtier (812), la tête de retenue (802) étant configurée pour effectuer une translation verticale entre une position déployée et une position escamotée et entre la position escamotée et la position déployée ;
une broche d'entraînement de chemin de came (804) couplée à la tête de retenue (802) ;
un levier de chemin de came (806) couplé au boîtier (812), le levier de chemin de came (806) étant configuré pour retenir la tête de retenue (802) par l'intermédiaire de la broche d'entraînement de chemin de came (804) en réponse à la tête de retenue (802) étant dans la position escamotée ; et
un ensemble de ressorts de compression (808), l'ensemble de ressorts de compression (808) étant configuré pour appliquer au moins une d'une force vers le haut constante ou quasi constante sur la tête de retenue (802).

2. Ensemble de retenue anti-sortie par roulement (700) selon la revendication 1, comprenant en outre :
un ensemble de ressorts en C (810) couplé au boîtier (812), l'ensemble de ressorts en C (810) étant configuré pour fournir des forces de ressort en rotation opposées afin de maintenir le levier de chemin de came (806) dans un état neutre sauf lorsqu'il est soumis à l'action de la broche d'entraînement de chemin de came (804).

3. Ensemble de retenue anti-sortie par roulement (700) selon la revendication 1 ou la revendication 2, dans lequel, en réponse à l'ensemble de retenue anti-sortie par roulement (700) dans la position déployée, le levier de chemin de came (806) comprend en outre une pointe saillante (904) configurée pour venir en prise avec la broche d'entraînement de chemin de came (804) en réponse à une première force vers le bas étant appliquée à la tête de retenue (802) de telle sorte que la tête de retenue (802) effectue une translation dans une direction vers le bas.

4. Ensemble de retenue anti-sortie par roulement (700) selon la revendication 3, dans lequel, en réponse à la broche d'entraînement de chemin de came (804) venant en prise avec une première face de la pointe saillante (904), le levier de chemin de came (806) tourne dans une première direction jusqu'à ce que la broche d'entraînement de chemin de came (804) se désengage de la première face (904a) de la pointe saillante (904).

5. Ensemble de retenue anti-sortie par roulement (700) selon la revendication 4, dans lequel le levier de chemin de came (806) comprend en outre une butée de dépassement de course (906) configurée pour venir en prise avec la broche d'entraînement de chemin de came (804) en réponse à la broche d'entraînement de chemin de came (804) se désengageant de la première face (904a) de la pointe saillante (904).

6. Ensemble de retenue anti-sortie par roulement (700) selon la revendication 5, dans lequel, en réponse à la broche d'entraînement de chemin de came (804) se désengageant de la butée de dépassement de course (906) et en réponse à la première force vers le bas cessant, le levier de chemin de came (806) tourne dans une seconde direction opposée à la première direction jusqu'à ce que la broche d'entraînement de chemin de came (804) vienne en prise avec une seconde face (904b) de la pointe saillante (904), et dans lequel la seconde face (904b) est une face incurvée dans laquelle la broche d'entraînement de chemin de came (804) est configurée pour reposer, plaçant ainsi l'ensemble de retenue anti-sortie par roulement (700) dans la position escamotée en raison de la force vers le haut constante ou quasi constante sur la tête de retenue (802) fournie par l'ensemble de ressorts de compression (808).

7. Ensemble de retenue anti-sortie par roulement (700) selon l'une quelconque des revendications précédentes, dans lequel, en réponse à l'ensemble de retenue anti-sortie par roulement (700) dans la position escamotée, le levier de chemin de came (806) comprend en outre une pointe saillante (904) configurée pour venir en prise avec la broche d'entraînement de chemin de came (804) et dans lequel, en réponse à une seconde force vers le bas étant appliquée à la tête de retenue (802), la broche d'entraînement de chemin de came (804) se désengage d'une seconde face (904b) de la pointe saillante (904), permettant ainsi au levier de chemin de came (806) de tourner dans une seconde direction.

8. Ensemble de retenue anti-sortie par roulement (700) selon la revendication 7, dans lequel, en réponse au levier de chemin de came (806) tournant dans la seconde direction et à la seconde force vers le bas se désengageant, la tête de retenue (802) est configurée pour effectuer une translation dans une direction vers le haut en raison de la force vers le haut constante ou quasi constante sur la tête de retenue (802) fournie par l'ensemble de ressorts de compression (808) jusqu'à la position déployée.

9. Ensemble de retenue anti-sortie par roulement (700) selon l'une quelconque des revendications précédentes, dans lequel la tête de retenue (802) comprend en outre une fente (814), dans lequel le boîtier (812) comprend en outre une broche (816), et dans lequel le mouvement de la tête de retenue (802) dans une direction verticale est limité par la broche (816) faisant saillie à travers le boîtier (812) dans la fente (814).

10. Ensemble de retenue anti-sortie par roulement (700) selon l'une quelconque des revendications précédentes, dans lequel la tête de retenue (812) comprend un vide central (1230) dans lequel la broche d'entraînement de chemin de came (816) est couplée à une paroi latérale du vide central (1230) et dans lequel le levier de chemin de came (806) est situé de manière centrale à l'intérieur du boîtier (812).

11. Ensemble de retenue anti-sortie par roulement (700) selon l'une quelconque des revendications précédentes, dans lequel la broche d'entraînement de chemin de came (804) est couplée à une partie extérieure de la tête de retenue (802) et dans lequel le levier de chemin de came (806) est situé de manière adjacente à la partie extérieure de la tête de retenue (802) à l'intérieur du boîtier (812).

12. Système de manutention de fret (400), comprenant :
un plateau à rouleaux (416) ;
une pluralité de rouleaux (604), la pluralité de rouleaux (604) étant couplée entre des parois latérales (602) du plateau à rouleaux (416) et espacée les uns des autres le long d'une longueur du plateau à rouleaux (416) ;
l'ensemble de retenue anti-sortie par roulement (700) selon l'une quelconque des revendications précédentes positionné entre au moins deux rouleaux de la pluralité de rouleaux (604).
